# EUROPEAN PATENT SPECIFICATION

(11) **EP 3 921 254 B1**
(45) Date of publication and mention of the grant of the patent: **21.05.2025**
(21) Application number: 20751951.3
(22) Date of filing: 06.02.2020
(51) Int. Cl.: B65G 45/18, B65G 45/22, B65G 45/26, B65G 17/08

(54) **CHAIN CLEANING MODULE, CONVEYOR COMPRISING SUCH A CHAIN CLEANING MODULE AND METHOD FOR CLEANING A CONVEYOR CHAIN**
KETTENREINIGUNGSMODUL, FÖRDERER MIT EINEM SOLCHEN KETTENREINIGUNGSMODUL UND VERFAHREN ZUM REINIGEN EINER FÖRDERKETTE
MODULE DE NETTOYAGE DE CHAÎNE, TRANSPORTEUR COMPRENANT LEDIT MODULE DE NETTOYAGE DE CHAÎNE ET PROCÉDÉ DE NETTOYAGE D'UNE CHAÎNE DE TRANSPORTEUR

(30) Priority: 07.02.2019 SE 1950143
(43) Date of publication of application: 15.12.2021
(73) Proprietor: FlexLink AB, 415 50 Göteborg (SE)
(72) Inventor: FERLINI, Gianluca, Casalecchio di Reno 40033 Bologna (IT)
(74) Representative: Zacco Sweden AB
(86) International application number: PCT/SE2020/050114
(87) International publication number: WO 2020/162822

(56) References cited:
- EP-A1- 3 117 711
- CH-A5- 680 726
- DE-U1- 9 310 626
- JP-A- 2000 016 566
- JP-A- S61 188 316
- US-A- 3 896 924
- US-A- 4 860 883
- US-A- 5 058 728
- US-A1- 2007 193 603
- US-B1- 10 046 920
- US-B1- 6 601 691

## Description

### TECHNICAL FIELD

The present invention relates to a chain cleaning module for cleaning a conveyor chain comprising a plurality of linked plate chain links. The chain cleaning module simplifies the cleaning of the conveyor chain, and reduces the required amount of cleaning fluid.

### BACKGROUND ART

Conveying devices, such as those that are used for moving objects between different stations in a factory, usually comprise a conveying track comprising an endless conveyor chain comprising a plurality of linked plate chain links. A conveyor track consists of an endless conveyor chain that is supported by conveyor beams. The conveyor chain glides on sliding surfaces on the conveyor beams in order to reduce the friction and the wear. This surface may be the conveyor beam itself or may be an additional component, such as a slide rail. The conveyor track may comprise curves and bends and at the end regions of a conveyor track, there is either a drive unit that drives the chain or an idler end unit that supports the chain for the return path.

There are a number of different designs for such conveyors available. Products may either be conveyed directly on the conveyor belt or chain, or may be conveyed on product carriers. A conveyor chain is made up of a large number of individual plate chain links, designed to be able to support the conveyed products. A conveyor system is adapted to different types of products. For some products, such as medical equipments or in lab automation, the environment is clean and dust free, but it is still of great importance that the conveyor chain is easy to clean in order to remove contaminations and spillage. For other products, the environment and/or the products may be dusty, wet and/or messy. For these products, it is also important that the conveyor chain is easy to clean in order to reduce wear of the conveyor and to ensure a reliable operation.

One such industry is the food industry, where various requirements regarding cleanliness are imposed on the handling of goods, mainly to ensure good sanitary conditions in the manufacturing or packaging process. This is necessary to ensure that the food products are not contaminated. Depending on the type of food products, more or less hygienic demands are imposed. In order to meet these requirements, a number of measures are often taken. These include different cleaning schemes, with e.g. washing parts of the conveyor at regular intervals, with a more thorough washing at less frequent intervals. These may include partly disassembling the conveyor system at regular intervals, and removing the chain to allow cleaning the conveyor system and chain.

In other cases, where the environment is clean and the products are also clean, it may be important that the conveyor chain is easy to clean when the conveyed product is changed from one product to another product, such that traces of one product is removed before the other product is conveyed. One reason is e.g. to prevent traces of allergens to end up on other products.

Different approaches for the cleaning of hygienic conveyor systems are known. In most systems, the conveyor chain can be raised to a position above the conveyor track, in order to gain access to the interior of the conveyor. The conveyor chain may also be removed to allow both the chain and the conveyor to be cleaned. It is further known to remove other parts of the conveyor, such as covers, guide rails, etc in order to be able to clean all parts of the conveyor.

It is also known to let the conveyor chain pass through a cleaning stage arranged in the return path of the conveyor chain. In the cleaning stage, the conveyor chains runs through a container with a cleaning liquid, such that the complete conveyor chain is immersed into the cleaning liquid. The cleaning stage may be provided with brushes that increase the cleaning effect of the cleaning stage. US 6601691 B1 and DE 8712326 U1 show examples of known conveyor chain cleaning devices.

By removing parts of the conveyor or by lifting the conveyor chain, the complete conveyor can be cleaned. This will require partial disassembly of the conveyor system, which takes a lot of time, effort and manpower. Another problem with the removal of parts is that the parts must be kept somewhere during the cleaning, which also increase the risk of contamination of the removed parts. There is also a risk that fasteners or other parts are lost and not replaced, which may lead to malfunction of the conveyor system. By immersing the complete conveyor chain in a cleaning liquid, the complete conveyor chain is cleaned, but must thereafter be dried before it can be used again. The cleaning liquid will eventually be contaminated, which means that the cleaning liquid must be replaced relatively often.

JP 61188316 A, US 10046920 B1, DE 9310626 U1 and US 6601691 B1 show different devices and methods for cleaning conveyor chains. DE 9310626 U1 discloses a conveyor chain cleaning module according to the preamble of claim 1.

These known devices work well for some applications, but there is still room for an improved chain cleaning device.

### DISCLOSURE OF INVENTION

An object of the invention is therefore to provide an improved conveyor chain cleaning module for a conveyor chain. A further object of the invention is to provide a conveyor comprising such a conveyor chain cleaning module. A further object of the invention is to provide a method for cleaning a conveyor chain.

The solution to the problem according to the invention is described in the characterizing part of claim 1 with regards to the conveyor chain cleaning module, in claim 11 with regards to the conveyor and in claim 12 with regards to the method. The other claims contain advantageous embodiments and further developments of the chain cleaning module and the method.

In a chain cleaning module for cleaning an endless conveyor chain comprising a plurality of plate chain links, where the chain cleaning module comprises a housing, a first rotational wheel, a second rotational wheel, a drive unit and a curved conveyor chain path adapted to glidingly support the conveyor chain in a return path of the conveyor chain, the object of the invention is achieved in that the first rotational wheel is provided with a sponge, the second rotational wheel is provided with a brush, the drive unit is adapted to drive the second rotational wheel, and that the chain cleaning module is provided with a tank member adapted to hold a cleaning liquid, where the sponge of the first rotational wheel extends partly into the tank member.

By this first embodiment of the conveyor chain cleaning module according to the invention, the chain cleaning module allows for an easy cleaning of a conveyor chain, where the bearing surface of the conveyor chain is cleaned in the return path of the conveyor chain. With the chain cleaning module, the contact surface between a product and the conveyor chain can be cleaned in an easy way, without having to clean to complete conveyor chain. This will save time and cleaning liquid. This is especially of advantage for dry products and when the products are altered relatively often, e.g. several times every day. The cleaning of the conveyor chain may be performed continuously or may be performed at specific times. The first rotational wheel provided with a sponge can be positioned in two positions, one in which the sponge bears on the bearing surface of the conveyor chain, and one in which the sponge is spaced apart from the conveyor chain.

The second wheel is provided with a brush adapted to rotate in a direction opposite to the direction of the moving direction of the conveyor chain. The brush will in this way be able to remove dust, particles and any remaining cleaning liquid from the surface of the conveyor chain. This will allow the conveyor chain to be used immediately after the cleaning process. The brush is adapted to bear on the bearing surface of the conveyor chain. The brush is adapted to remove dust etc. from the bearing surface of the conveyor chain, and is thus in constant contact with the bearing surface of the conveyor chain.

The complete cleaning module is concealed such that no cleaning liquid can escape or leak during use. The cleaning module is further provided with two outlet ports, where a first outlet port is arranged at the tank member for the cleaning liquid and a second outlet port is arranged to collect excessive cleaning liquid that has been removed by the brush. The tank member may also be provided with a floating body connected to an inlet valve for a cleaning liquid. This will secure that there is always enough cleaning liquid in the tank member.

### BRIEF DESCRIPTION OF DRAWINGS

The invention will be described in greater detail in the following, with reference to the embodiments that are shown in the attached drawings, in which
- Fig. 1: shows a chain cleaning module according to the invention,
- Fig. 2: shows a cut side view of a chain cleaning module according to the invention with the first rotational wheel in a first position, and
- Fig. 3: shows a cut side view of a chain cleaning module according to the invention with the first rotational wheel in a second position.

### MODES FOR CARRYING OUT THE INVENTION

The embodiments of the invention with further developments described in the following are to be regarded only as examples and are in no way to limit the scope of the protection provided by the patent claims.

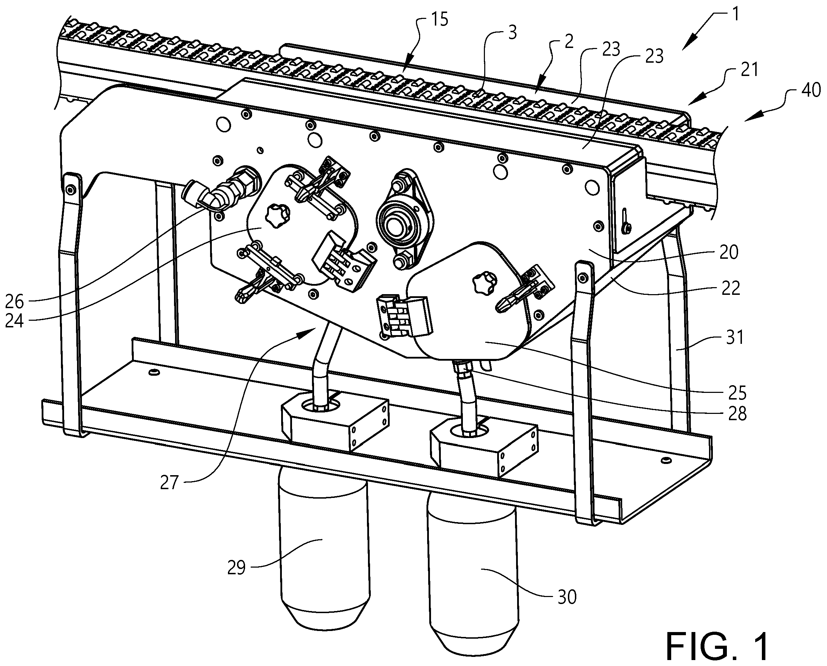

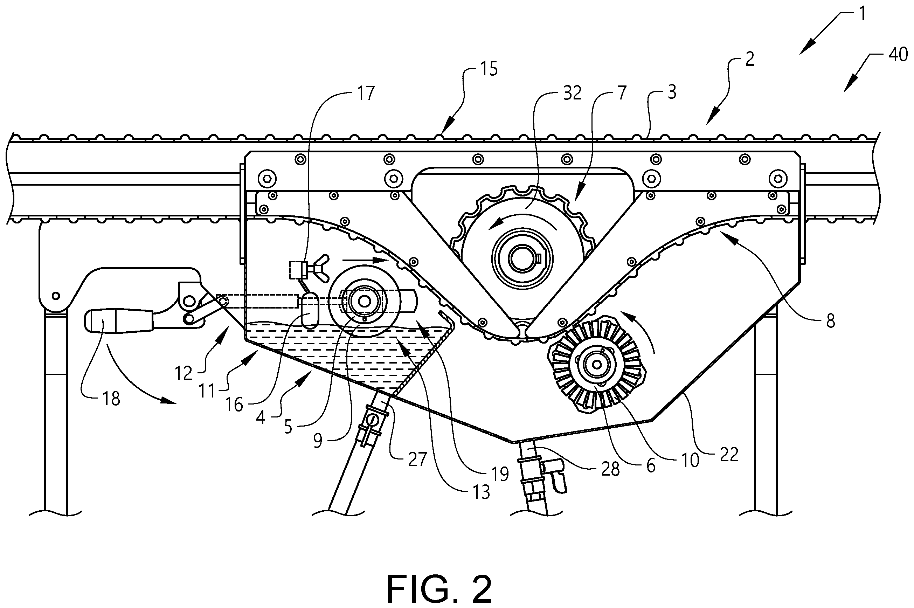

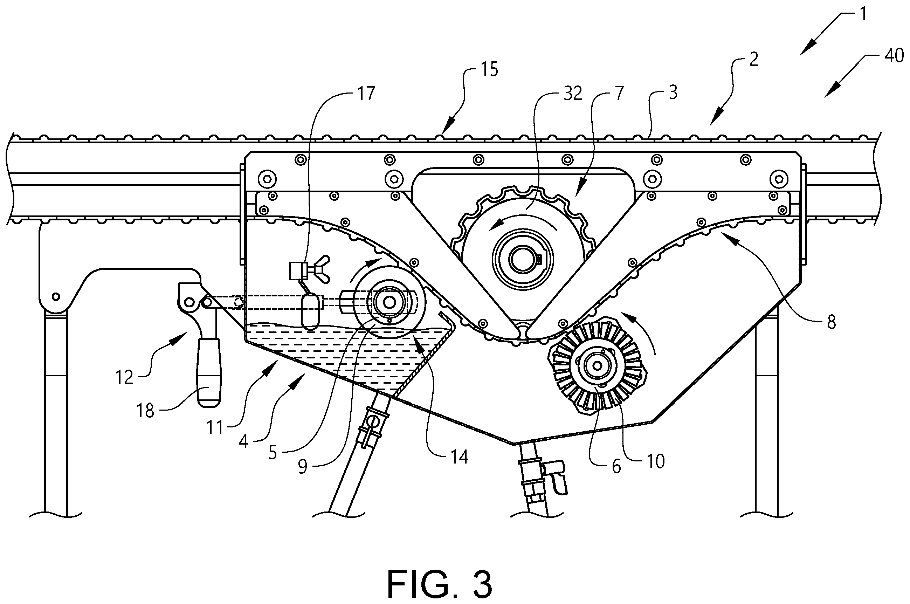

Fig. 1 shows a view of a chain cleaning module according to the invention. Figs. 2 and 3 show a cut view of a chain cleaning module according to the invention.

The chain cleaning module 1 comprises a housing 4. The housing is adapted to be attached to a conveyor beam, where it is attached to the sides of the conveyor beam by the use of screws and nuts arranged in a T-slot of the conveyor beam. The chain cleaning module is arranged in the return path of the conveyor chain. The conveyor chain 2 is a plate chain comprising a plurality of plate chain links 3 linked together to form an endless plate chain link. A cut-out is required in the regular return path of the conveyor beam such that the conveyor chain can be rerouted in a conveyor chain path 8 of the chain cleaning module. The housing comprises a front side wall 20, a rear side wall 21, a lower side wall 22 and an upper side wall 23. The side walls will conceal the conveyor chain path in the chain cleaning module completely. This will ensure that cleaning liquid does not escape from the chain cleaning module and that dust or particles from the outside enters the chain cleaning module.

The chain cleaning module 1 is further provided with a first door 24 and a second door 25. The first door and the second door are arranged to simplify access to the inner of the chain cleaning module, and in this case to simplify the replacement of a sponge and a brush used for the cleaning of the conveyor chain. The housing is provided with a fluid inlet 26 that may be connected to a container comprising cleaning liquid. The housing is further provided with a first fluid outlet 27 and a second fluid outlet 28, where the first outlet 27 is connected to a first container 29 and where the second outlet 28 is connected to a second container 30. The first outlet 27 is adapted to discharge cleaning liquid when it is to be replaced, and the second outlet is adapted to discharge excessive cleaning liquid that has been brushed off the conveyor chain during the cleaning process. The chain cleaning module is in the shown example also provided with a frame 31 which holds the first and the second container.

The side walls will both prevent cleaning liquid to escape the chain cleaning module, and will also act as protective covers which prevents fingers and other objects to get caught in the chain cleaning module. It will thus be impossible to reach the inner of the chain cleaning module during use.

Fig. 2 shows a cut view of the chain cleaning module 1. The chain cleaning module comprises a conveyor chain path 8, a first rotational wheel 5, a second rotational wheel 6 and a drive unit 7. The conveyor chain path 8 reroutes the conveyor chain in the return path of the conveyor chain such that it passes the first and second rotational wheels. The first rotational wheel 5 is provided with a sponge 9 of some kind. The sponge is adapted to wet the bearing surface 15 of the conveyor chain with cleaning liquid. The second rotational wheel 6 is provided with a brush 10 that is adapted to continuously brush off dust and particles from the bearing surface of the conveyor chain, and to brush off cleaning liquid from the bearing surface of the conveyor chain when the conveyor chain is cleaned. The drive unit 7 is adapted to rotate the second wheel in the opposite direction of the travel direction of the conveyor chain. The drive unit may be an electric motor connected directly to the second wheel. In the shown example, the drive unit comprises a toothed wheel 32 that meshes with the rear side of the conveyor chain and is in this way driven by the conveyor chain. In this case, the second wheel is driven by the toothed wheel through a belt or the like.

The chain cleaning module is further provided with a tank member 11 arranged at the first rotational wheel 5. The tank member 11 is adapted to hold a cleaning liquid. Since the complete conveyor chain must not pass through the tank member, the volume of the tank member may be relatively small, which simplifies the replacement of cleaning liquid and reduces the amount of cleaning liquid that must be replaced. The tank member comprises a floating body 16 that is connected to an inlet 26 through an inlet valve 17. When the level of cleaning liquid falls below a first predefined level, the floating body will open the inlet valve and cleaning liquid will enter the tank member until a second predefined level is reached, where the floating body closes the inlet valve.

The first rotational wheel 5 is arranged on a movable unit 12 comprising a slidable bracket 19 on which the first rotational wheel is mounted. The first rotational wheel can be positioned in a first position 13, which is shown in Fig. 2, and in a second position 14, which is shown in Fig. 3. In the first position 13, the sponge 9 of the first rotational wheel 5 is spaced apart from the bearing surface 15 of the conveyor chain 2. In the second position 14, the sponge 9 of the first rotational wheel 5 bears against the bearing surface 15 of the conveyor chain. The movable unit 12 is controlled by a handle 18, which can move the first rotational wheel from the first position to the second position or from the second position to the first position. The first rotational wheel will rotate with the conveyor chain when the sponge bears against the bearing surface of the conveyor chain. The sponge will extend into the cleaning liquid and will thus wet the bearing surface of the conveyor chain with cleaning liquid when the first rotational wheel rotates. The movable unit may also comprise a linear actuator, either an electric actuator or a pneumatic actuator, which can be controlled by an electronic control unit (ECU), such that the cleaning of the conveyor chain can be performed at e.g. regular time intervals or when a signal is sent to the ECU that a change of produced articles is due.

The floating body will ensure that the level of cleaning liquid is always above a predefined level, such that the sponge of the first rotational wheel will always reach into the cleaning liquid. The cleaning of the conveyor chain may be continuous or may be performed at specific times, e.g. when another product is to be conveyed.

The second rotational wheel 6 is provide with a brush 10. The brush 10 is in the shown example always in contact with the bearing surface 15 of the conveyor chain, but it is possible to arrange also the second rotational wheel on a movable unit, which may be controlled independently of the first movable unit. In the shown example, the drive unit is driven by the conveyor chain, which means that the brush will constantly brush the bearing surface such that dust, particles etc. are constantly removed. Both the brush 10 and the sponge 9 can easily be replaced through the second door and the first door, respectively.

When the cleaning liquid should be replaced, the inlet is closed such that no new cleaning liquid can enter the tank member. The first outlet is opened and the cleaning liquid can flow to the first container 29. At the same time, the sponge may be cleaned or replaced. Excessive cleaning liquid that has been brushed off by the brush may be discharged through the second outlet to the second container.

The chain cleaning module may be used in conveyor systems that conveys different products, but is primarily intended for dry products where dust or particles from the products may stick to the bearing surface of the conveyor chain. When the same product is conveyed, the bearing surface is cleaned by the use of the brush, and when a new product is to be conveyed, the bearing surface can also be cleaned by the use of the cleaning liquid and the sponge, such that all remains of the previous product is removed. Since only the bearing surface is cleaned, the chain cleaning module is not suitable for liquid or wet products, which may contaminate the complete plate chain links.

The invention is not to be regarded as being limited to the embodiments described above, a number of additional variants and modifications being possible within the scope of the subsequent patent claims. The chain cleaning module may have any size and shape, and may be arranged at any position in the return path of the conveyor chain.

### REFERENCE SIGNS

- 1:: Chain cleaning module
- 2:: Conveyor chain
- 3:: Plate chain link
- 4:: Housing
- 5:: First rotational wheel
- 6:: Second rotational wheel
- 7:: Drive unit
- 8:: Conveyor chain path
- 9:: Sponge
- 10:: Brush
- 11:: Tank member
- 12:: Movable unit
- 13:: First position
- 14:: Second position
- 15:: Bearing surface
- 16:: Floating body
- 17:: Inlet valve
- 18:: Handle
- 19:: Bracket
- 20:: Front side wall
- 21:: Rear side wall
- 22:: Lower side wall
- 23:: Upper side wall
- 24:: First door
- 25:: Second door
- 26:: Inlet
- 27:: First outlet
- 28:: Second outlet
- 29:: First container
- 30:: Second container
- 31:: Frame
- 32:: Toothed wheel
- 40:: Conveyor

## Claims

1. Conveyor chain cleaning module (1) for cleaning an endless conveyor chain (2) comprising a plurality of plate chain links (3), where the chain cleaning module (1) comprises a housing (4), a first rotational wheel (5), a second rotational wheel (6) provided with a brush (10) bearable on a bearing surface (15) of the conveyor chain (2), a drive unit (7) adapted to drive the second rotational wheel (6), and a tank member (11) adapted to hold a cleaning liquid, where the first rotational wheel (5) extends partly into the tank member (11), **characterized in that** the conveyor chain cleaning module comprises a curved conveyor chain path (8) adapted to glidingly support the conveyor chain (2) in a return path of the conveyor chain (2), and that the first rotational wheel (5) is provided with a sponge (9), and that the first rotational wheel (5) is arranged on a movable unit (12) having a first position (13) and a second position (14), where the sponge (9) is arranged to bear on the bearing surface (15) of the conveyor chain (2) in the second position (14) such that the first rotational wheel (5) is driven by the conveyor chain (2).

2. Conveyor chain cleaning module according to claim 1, **characterized in that** the movable unit (12) comprises an electric or pneumatic linear actuator.

3. Conveyor chain cleaning module according to claim 1 or 2, **characterized in that** the drive unit (7) is arranged to rotate the second rotational wheel (6) in a direction opposite the moving direction of the conveyor chain (2).

4. Conveyor chain cleaning module according to any of claims 1 to 3, **characterized in that** the drive unit (7) is arranged to be driven by the conveyor chain (2).

5. Conveyor chain cleaning module according to claim 4, **characterized in that** the drive unit (7) comprises a toothed wheel (32).

6. Conveyor chain cleaning module according to any of claims 1 to 3, **characterized in that** the drive unit (7) comprises an electrical motor.

7. Conveyor chain cleaning module according to any of the preceding claims, **characterized in that** the cleaning module (1) is provided with a floating body (16) arranged at the tank member (11), where the floating body (16) is connected to an inlet valve (17) for a cleaning liquid.

8. Conveyor chain cleaning module according to claim any of the preceding claims, **characterized in that** the sponge (9) is arranged on the first rotational wheel (5) in a removable manner.

9. Conveyor chain cleaning module according to claim any of the preceding claims, **characterized in that** the brush (10) is arranged on the second rotational wheel (6) in a removable manner.

10. Conveyor chain cleaning module according to any of the preceding claims, **characterized in that** the tank member (11) is provided with an outlet (27).

11. Conveyor (40), comprising at least one conveyor chain cleaning module (1) according to any of claims 1 to 10.

12. Method for cleaning the bearing surface of an endless conveyor chain comprising a plurality of plate chain links (3) with a conveyor chain cleaning module (1) according to any of claims 1 to 10, the method comprising the following steps:
wetting the bearing surface of the conveyor chain with the sponge arranged on the first rotational wheel driven by the conveyor chain,
brushing the bearing surface of the conveyor chain with the brush arranged on the second rotational wheel, where the second rotational wheel rotates in a direction opposite the moving direction of the conveyor chain.

13. Method according to claim 12, **characterized in that** the first rotational wheel can be moved from a position in which the sponge bears on the bearing surface of the conveyor chain to a position where the sponge is spaced apart from the bearing surface of the conveyor chain.

## Patentansprüche

1. Förderkettenreinigungsmodul (1) zum Reinigen einer endlosen Förderkette (2), die eine Vielzahl von Plattenkettengliedern (3) umfasst, wobei das Kettenreinigungsmodul (1) ein Gehäuse (4), ein erstes Drehrad (5), ein zweites Drehrad (6) das mit einer Bürste (10) versehen ist die auf einer Lagerfläche (15) der Förderkette (2) auflegbar ist, eine Antriebseinheit (7) die dazu ausgelegt ist das zweite Drehrad (6) anzutreiben, und ein Tankelement (11) das dazu ausgelegt ist eine Reinigungsflüssigkeit aufzunehmen, umfasst, wobei sich das erste Drehrad (5) teilweise in das Tankelement (11) erstreckt, **dadurch gekennzeichnet, dass** das Förderkettenreinigungsmodul eine kurvenförmige Förderkettenbahn (8) umfasst, die dazu ausgelegt ist, die Förderkette (2) in einer Rücklaufbahn der Förderkette (2) gleitend zu tragen, und dass das erste Drehrad (5) mit einem Schwamm (9) versehen ist, und dass das erste Drehrad (5) an einer bewegbaren Einheit (12) angeordnet ist die eine erste Position (13) und eine zweite Position (14) aufweist, wobei der Schwamm (9) dazu angeordnet ist auf der Lagerfläche (15) der Förderkette (2) in der zweiten Position (14) aufzuliegen, so dass das erste Drehrad (5) durch die Förderkette (2) angetrieben wird.

2. Förderkettenreinigungsmodul nach Anspruch 1, **dadurch gekennzeichnet, dass** die bewegbare Einheit (12) einen elektrischen oder pneumatischen Linearaktor umfasst.

3. Förderkettenreinigungsmodul nach Anspruch 1 oder 2, **dadurch gekennzeichnet, dass** die Antriebseinheit (7) dazu angeordnet ist, das zweite Drehrad (6) in einer Richtung zu drehen, die der Bewegungsrichtung der Förderkette (2) entgegengesetzt ist.

4. Förderkettenreinigungsmodul nach einem der Ansprüche 1 bis 3, **dadurch gekennzeichnet, dass** die Antriebseinheit (7) dazu angeordnet ist, durch die Förderkette (2) angetrieben zu werden.

5. Förderkettenreinigungsmodul nach Anspruch 4, **dadurch gekennzeichnet, dass** die Antriebseinheit (7) ein Zahnrad (32) umfasst.

6. Förderkettenreinigungsmodul nach einem der Ansprüche 1 bis 3, **dadurch gekennzeichnet, dass** die Antriebseinheit (7) einen Elektromotor umfasst.

7. Förderkettenreinigungsmodul nach einem der vorhergehenden Ansprüche, **dadurch gekennzeichnet, dass** das Reinigungsmodul (1) mit einem Schwimmkörper (16) versehen ist, der an dem Tankelement (11) angeordnet ist, wobei der Schwimmkörper (16) mit einem Einlassventil (17) für eine Reinigungsflüssigkeit verbunden ist.

8. Förderkettenreinigungsmodul nach einem der vorhergehenden Ansprüche, **dadurch gekennzeichnet, dass** der Schwamm (9) an dem ersten Drehrad (5) auf abnehmbare Weise angeordnet ist.

9. Förderkettenreinigungsmodul nach einem der vorhergehenden Ansprüche, **dadurch gekennzeichnet, dass** die Bürste (10) an dem zweiten Drehrad (6) auf abnehmbare Weise angeordnet ist.

10. Förderkettenreinigungsmodul nach einem der vorhergehenden Ansprüche, **dadurch gekennzeichnet, dass** das Tankelement (11) mit einem Auslass (27) versehen ist.

11. Förderer (40), umfassend mindestens ein Förderkettenreinigungsmodul (1) nach einem der Ansprüche 1 bis 10.

12. Verfahren zum Reinigen der Lagerfläche einer endlosen Förderkette, die eine Vielzahl von Plattenkettengliedern (3) mit einem Förderkettenreinigungsmodul (1) nach einem der Ansprüche 1 bis 10 umfasst, wobei das Verfahren die folgenden Schritte umfasst:
Befeuchten der Lagerfläche der Förderkette mit dem Schwamm, der an dem ersten Drehrad angeordnet ist, das durch die Förderkette angetrieben wird,
Bürsten der Lagerfläche der Förderkette mit der Bürste, die an dem zweiten Drehrad angeordnet ist, wobei sich das zweite Drehrad in einer Richtung dreht, die der Bewegungsrichtung der Förderkette entgegengesetzt ist.

13. Verfahren nach Anspruch 12, **dadurch gekennzeichnet, dass** das erste Drehrad von einer Position, in welcher der Schwamm auf der Lagerfläche der Förderkette aufliegt, in eine Position bewegt werden kann, in welcher der Schwamm von der Lagerfläche der Förderkette beabstandet ist.

## Revendications

1. Module de nettoyage de chaîne de transporteur (1) pour le nettoyage d'une chaîne de transporteur sans fin (2) comprenant une pluralité de maillons de chaîne à plaques (3), dans lequel le module de nettoyage de chaîne (1) comprend un boîtier (4), une première roue rotative (5), une seconde roue rotative (6) munie d'une brosse (10) pouvant s'appuyer sur une surface d'appui (15) de la chaîne de transporteur (2), une unité d'entraînement (7) conçue pour entraîner la seconde roue rotative (6), et un élément de réservoir (11) conçu pour contenir un liquide de nettoyage, où la première roue rotative (5) s'étend partiellement dans l'élément de réservoir (11), **caractérisé en ce que** le module de nettoyage de chaîne de transporteur comprend un chemin de chaîne de transporteur incurvé (8) conçu pour supporter la chaîne de transporteur (2) de manière coulissante sur un chemin de retour de la chaîne de transporteur (2), et **en ce que** la première roue rotative (5) est munie d'une éponge (9) et est disposée sur une unité mobile (12) présentant une première position (13) et une seconde position (14), où l'éponge (9) est agencée pour prendre appui sur la surface d'appui (15) de la chaîne de transporteur (2) dans la seconde position (14), de sorte que la première roue rotative (5) soit entraînée par la chaîne de transporteur (2).

2. Module de nettoyage de chaîne de transporteur selon la revendication 1, **caractérisé en ce que** l'unité mobile (12) comprend un actionneur linéaire électrique ou pneumatique.

3. Module de nettoyage de chaîne de transporteur selon la revendication 1 ou 2, **caractérisé en ce que** l'unité d'entraînement (7) est agencée pour entraîner la seconde roue rotative (6) en rotation dans une direction opposé à la direction de déplacement de la chaîne de transporteur (2).

4. Module de nettoyage de chaîne de transporteur selon l'une quelconque des revendications 1 à 3, **caractérisé en ce que** l'unité d'entraînement (7) est agencée pour être entraînée par la chaîne de transporteur (2).

5. Module de nettoyage de chaîne de transporteur selon la revendication 4, **caractérisé en ce que** l'unité d'entraînement (7) comprend une roue dentée (32).

6. Module de nettoyage de chaîne de transporteur selon l'une quelconque des revendications 1 à 3, **caractérisé en ce que** l'unité d'entraînement (7) comprend un moteur électrique.

7. Module de nettoyage de chaîne de transporteur selon l'une quelconque des revendications précédentes, **caractérisé en ce que** le module de nettoyage (1) est équipé d'un corps flottant (16) disposé au niveau de l'élément de réservoir (11), où corps flottant (16) est relié à une vanne d'admission (17) pour un liquide de nettoyage.

8. Module de nettoyage de chaîne de transporteur selon l'une quelconque des revendications précédentes, **caractérisé en ce que** l'éponge (9) est disposée de manière amovible sur la première roue rotative (5).

9. Module de nettoyage de chaîne de transporteur selon l'une quelconque des revendications précédentes, **caractérisé en ce que** la brosse (10) est disposée de manière amovible sur la seconde roue rotative (6).

10. Module de nettoyage de chaîne de transporteur selon l'une quelconque des revendications précédentes, **caractérisé en ce que** l'élément de réservoir (11) est doté d'une sortie (27).

11. Transporteur (40), comprenant au moins un module de nettoyage de chaîne de transporteur (1) selon l'une quelconque des revendications 1 à 10.

12. Procédé de nettoyage de la surface d'appui d'une chaîne de transporteur sans fin comprenant une pluralité de maillons à plaques (3) au moyen d'un module de nettoyage de chaîne de transporteur (1) selon l'une quelconque des revendications 1 à 10, le procédé comprenant les étapes consistant à :
mouiller la surface d'appui de la chaîne de transporteur avec l'éponge agencée sur la première roue rotative entraînée par la chaîne de transporteur ;
brosser la surface d'appui de la chaîne de transporteur avec la brosse disposée sur la seconde roue rotative, où la seconde roue rotative tourne dans une direction opposée à la direction de déplacement de la chaîne de transporteur.

13. Procédé selon la revendication 12, **caractérisé en ce que** la première roue rotative peut être déplacée d'une position où l'éponge prend appui sur la surface d'appui de la chaîne de transporteur à une position où l'éponge est éloignée de la surface d'appui de la chaîne de transporteur.
